Europäisches Patentamt

European Patent Office

Office européen des brevets

(11) Numéro de publication: **0 469 219 A1**

# DEMANDE DE BREVET EUROPEEN

(21) Numéro de dépôt: 90500078.2

(22) Date de dépôt: **31.07.90**

(51) Int. Cl.5: **G09B 27/06**, G09B 23/00

(43) Date de publication de la demande:
**05.02.92 Bulletin 92/06**

(84) Etats contractants désignés:
**DE FR GB SE**

(71) Demandeur: **Peran Torres, Gregorio**
**Calle Alberto Aguilera 44, 3 piso H**
**E-28015 Madrid(ES)**

(72) Inventeur: **Peran Torres, Gregorio**
**Calle Alberto Aguilera 44, 3 piso H**
**E-28015 Madrid(ES)**

(54) **Modèle didactique pour la représentation de deux systèmes de coordonnées horizontale et équatoriale.**

(57) Il se compose de deux ensembles et une armature avec support. Le premier est formé par un double plan circulaire (1) correspondant à deux horizons antipodes (2) et (3), une double tringle semi-cylindrique circulaire représentant le Méridien du Lieu (4) et un axe comme Verticale du Lieu d'observation (5), perpendiculaire aux plans horizontaux. Le second est formé par trois tringles circulaires qui représentent l'Equateur Céleste (6) et les Tropiques (7) et (8), et un axe normal au plan de ces cercles ou axe des Pôles (9). Une armature métallique semi-circulaire (10) et un axe (11) commun aux deux systèmes ou ensembles permet au deuxième de se déplacer par rapport au premier avec une amplitude de rotation de $0\underline{o}$ à $90\underline{o}$, aux deux sur eux-mêmes, avec une amplitude de $180\underline{o}$. Une variante du modèle représente, au moyen d'une spirale de 183 pas, la déclinaison solaire chaque jour de l'année. Ce modèle peut être appliqué à l'enseignement primaire et secondaire.

EP 0 469 219 A1

**Fig 1B**

La présente invention est un prototype de modèle didactique pour l'enseignement et l'apprentissage comportant plusieurs questions de Géographie astronomique et mathématique fondées sur la relation entre deux systèmes de coordonnées: un d'observation directe mais de valeur locale dont les lignes de référence sont le cercle de l'horizon et un autre indépendant du lieu d'observation de valeur générale par rapport à l'équateur.

Ces questions ne peuvent être résolues avec les modèles didactiques habituellement utilisés pour illustrer les problèmes qui se posent pour l'étude de la Géographie astronomique, c'est à dire, sphères terrestres, sphères célestes et sphères armillaires, mis à part les modèles qui essayent de reproduire les mouvements des corps du Cosmos du point de vue de notre planète tels que le sont les planétarium de différente complexité.

Ce modèle didactique rend sensoriel de façon tridimensionnelle, le mouvement apparent du soleil, autour de la Terre, ou plus exactement autour du lieu d'observation qui détermine l'Equateur et les Tropiques.

- le plan circulaire, apparent également, de l'Horizon
- la Verticale du Lieu, définie par le fil à plomb dans le lieu d'observation.
- le Méridien du Lieu, répondant aux conditions qui définissent méridiens et cercles verticaux.
- l'Axe des Pôles et l'Etoile Polaire
- La Hauteur sur l'Horizon
- L'Azimut
- La Déclinaison etc.

Ce modèle rend donc sensoriel l'abstraction mathématique que supposent deux systèmes de coordonnées sphériques.

Tous ces éléments sensibles ou imaginaires sont formulés d'habitude mathématiquement et représentés bidimensionnellement sur un plan, ceci, du point de vue didactique, constitue un sérieux obstacle pour leur compréhension.

Dans le modèle, l'abstraction devient sensorielle en se matérialisant dans les trois dimensions de notre monde sensible et devient accéssible aux élèves d'enseignement primaire et secondaire qui sont, généralement, de pensée concrète ou d'abstraction difficultueuse.

Les concepts qui sont désormais assimilables à ces élèves sont, notamment, l'explication de la différente durée des jours et des nuits par rapport à un lieu, défini par la latitude, celle-ci déduite de la hauteur du pôle sur l'horizon, saisons et inversion saisonnière selon les hémisphères, déductibilité de valeurs générales, comme la déclinaison solaire, à partir des valeurs observées.

Si l'on atteignait ces objectifs grâce au modèle, son utilité dans l'enseignement deviendrait évidente; cette uilité pourrait être appliquée de façon générale à l'éducation et, par conséquent, sa diffusion répercuterait de façon importante dans l'Industrie et dans le Commerce.

Une des caractéristiques essentielles du modèle est sa simplicité primaire, sans éliminer, en principe, d'autres variantes plus complexes. Dans le schéma présenté dans la figure l'on peut observer comme pièce centrale un double plan circulaire qui représente des horizons antipodes: Horizon (1) -Sur ces plans, on ajuste à l'aide de languettes, des cartes antipodes qui représentent le milieu local (2) et (3). -Un ruban adhésif bleu représente la projection du Méridien du Lieu sur la surface terrestre, c'est à dire la direction Nord-Sud comme référence pour la détermination des azimuts.

Un axe (5) perpendiculaire à ces plans horizontaux représente la Verticale du Lieu, en même temps qu'il articule le modèle ou appareil. Une tringle circulaire (4a), perpendiculaire au double plan horizontal, représente les Cercles Verticaux. L'intersection de l'axe (verticale) (5) et de cette tringle circulaire représente les points Zénith et Nadir. Cet ensemble reproduit sensoriellement le Système de Coordonnées, qui se rapporte à l'Horizon, observable depuis le Lieu indiqué par l'intersection de l'axe de la Verticale et du plan horizontal.

Le deuxième ensemble qu'intègre le modèle est formé par une autre tringle circulaire (6) commune en deux points avec le plan horizontal et représente l'Equateur Céleste tandis qu'une autre tringle circulaire (40) de rayon égal, normal à celui-là, représente les cercles méridiens. Un axe commun au plan de ce dernier et perpendiculaire à celui de l'Equateur représente l'axe des pôles.

Le modèle se présente sous deux versions:- Une simplifiée avec les déclinaisons solaires variables représentées par trois cercles, celui de l'Equateur (6) et les deux autres correspondants aux Tropiques (7) et (8). -L' autre, avec une spirale métallique de 183 pas [1] , pour représenter, jour après jour, la déclinaison solaire tout au long de l'année, au moyen d'un disque représentant le Soleil.

Les deux ensembles, horizontal et équatorial, s'articulent à l'aide d'un axe commun:- aux cercles horizontal et équatorial - aux axes qui représentent la Verticale du Lieu et Axe des Pôles (11) - à l'armature qui contient la totalité(10). Cela permet ainsi, au second ensemble, qui représente ou reproduit le système équatorial de coordonnées, un mouvement circulaire par rapport au premier ensemble horizontal, de $0_\circ$ à $90_\circ$ d'amplitude, (11) lu sur l'échelle graduée qui accompagne le cercle

[1] Il faut tenir compte que 183 pas ne correspondent pas exactement à la durée de l'année.

que représente le premier Cercle Vertical -Méridien du Lieu. Cet axe commun, permet également aux deux ensembles de se déplacer jusqu'à 180o pour présenter la situation correspondante dans l'autre hémisphère (Nord-Sud).

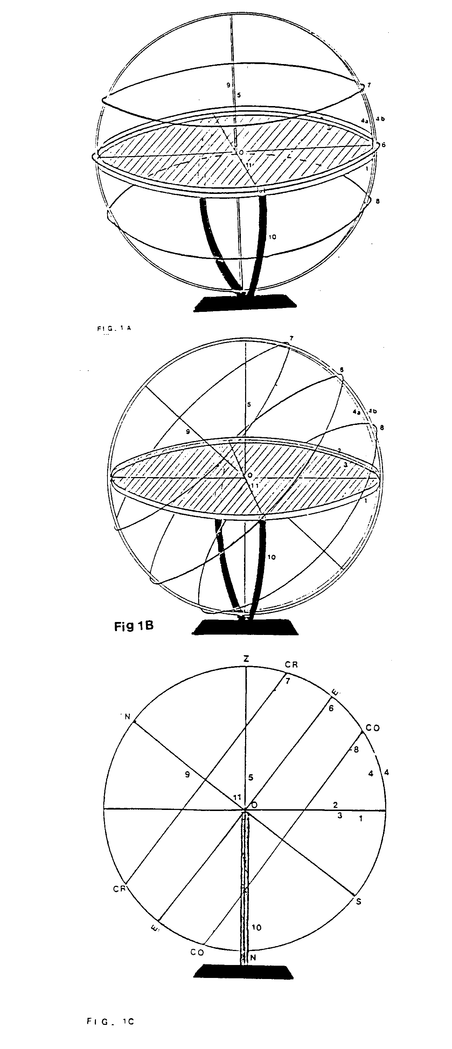

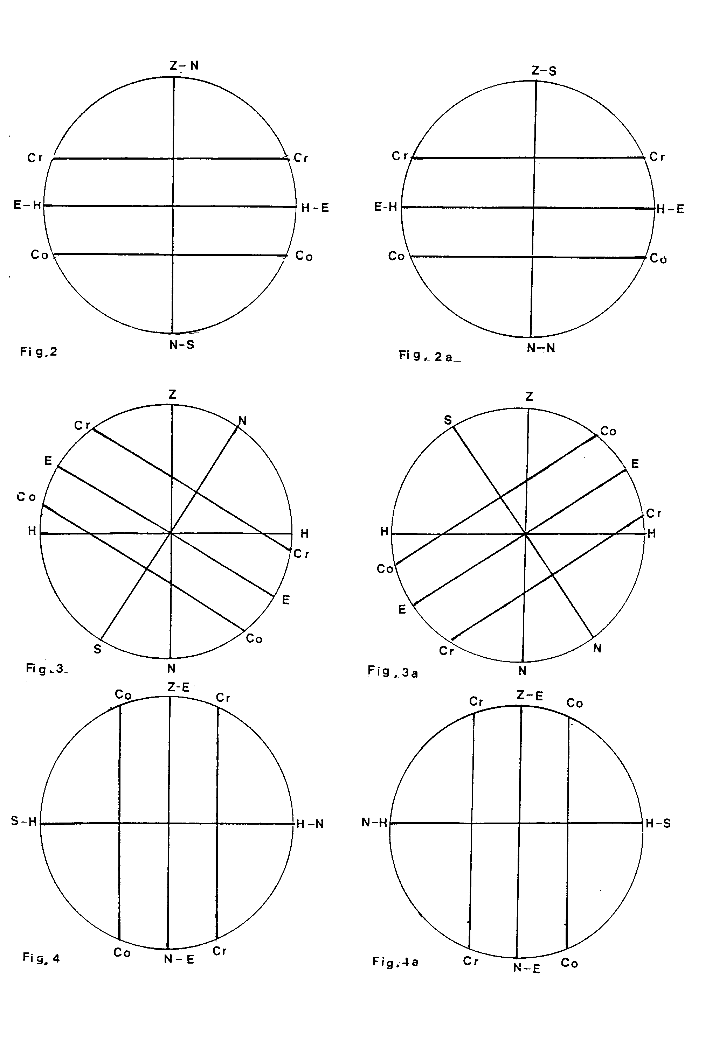

Si l'observateur se trouvait au Pôle, ou en d'autres mots, le Pôle était le lieu d'observation, les plans équatorial et horizontal coincideraient avec l'axe des Pôles et la Verticale du Lieu. Figures 2 et 2a. Si la position de l'observateur se déplaçait vers le Sud (ou vers le Nord dans l'hémisphère sud) la Hauteur du Pôle sur l'Horizon serait inférieure à 90o et le plan horizontal formerait des angles équivalants au plan équatorial et la Verticale du Lieu avec l'Axe des Pôles. Figures 3 et 3a.

La Hauteur du Pôle minimum sur l'Horizon est 0o ce qui signifie que l'observateur est à l'Equateur, le lieu d'observation située sur la ligne équatoriales d'où le Plan de l' Equateur est perpendiculaire au plan horizontal, et la Verticale du Lieu à l'Axe des Pôles. Figures 4 et 4a.

Les différents lieux d'observation, changeants selon la Latitude, supposent des durées variables du jour solaire pour le même jour de l'année éxprimés, dans le modèle, par les secteurs circulaires de chaque pas de la spirale ou pour les deux équinoxes et les deux solstices, par les secteurs circulaires de l'Equateur et les deux Tropiques.

La Hauteur du Pôle est déterminée sensoriellement, dans le modèle, par la position de l'extrémité de l'Axe des Pôles indiqué par une reproduction de l'Etoile Polaire sur l'échelle graduée de 0o à 90o accompagnant la tringle circulaire qui représente le Méridien du Lieu.

Dans la variante du modèle avec la spirale qui représente le mouvement apparent de l'hélice du Soleil qui se lève et qui se couche dans un point de l'horizon différent chaque jour de l'année, un disque représentant le soleil ajusté à la spirale pour se déplacer sur elle, permet d'observer ses différentes hauteurs tout au long du jour, et sa déclinaison variable ou distance par rapport à l'Equateur céleste tout au long de l'année. Ce mouvement apparent, diurne et annuel du soleil, est susceptible d'être reproduit dans le modèle à l'aide d'un mouvement manuel ou autonome du disque qui le représente.

**Revendications**

1. "MODELE DIDACTIQUE POUR LA REPRESENTATION DE DEUX SYSTEMES DE COORDONNEES, HORIZONTALE ET EQUATORIALE" caractérisé par l'effet sensoriel de ces systèmes matérialisés en trois dimensions. Il se compose de deux ensembles et une armature.

a) Le premier ensemble représente le système de coordonnées horizontales. Il est formé par un double plan circulaire qui représente l'environnement local de deux horizons antipodes au moyen de cartes correspondantes topographiques d'échelle proportionnelle aux dimensions du modèle. Une tringle circulaire normale à l'Horizon représente le Méridien du Lieu et un axe perpendiculaire dans le centre du plan de l'Horizon représente la Verticale du Lieu.

b) Le deuxième ensemble est formé par une tringle circulaire qui représente l'Equateur, de rayon légèrement supérieur à celui de l'Horizon (1-2 mm) afin de pouvoir inclure celui-ci. Une autre tringle circulaire normale à celle qui représente l' Equateur reproduit le Méridien du Lieu. Comme celui-ci répond aux conditions qui définissent un Cercle Vertical et un Méridien, ces cercles sont formés à l'aide de tringles pour constituer tous les deux, mais indépendamment, la représentation du Méridien du Lieu. Une tringle droite représente l'Axe des Pôles et, à son extrémité Nord, une petite étoile représente l'Etoile Polaire et la position du Pôle.

c) Un axe en acier articule l'ensemble formé d'un côté par l'armature, de l'autre par les tringles circulaires, et des droites qui représentent l'Horizon, l'Equateur, la Verticale du Lieu et l'Axe des Pôles permettant ainsi les mouvements de l'ensemble.

2. UN MODELE SELON REVENDICATION 1), doté d'une spirale de 183 pas d'hélice fermé, avec un disque ajusté à la spirale prêt à être mobilisé manuellement.

3. UN MODELE SELON REVENDICATION 2) avec le disque qui représente le Soleil doté de mouvement autonome au moyen d'un mécanisme d'horlogerie.

FIG. 1A

Fig 1B

FIG. 1C

Fig.2

Fig.2a

Fig.3

Fig.3a

Fig.4

Fig.4a

# RAPPORT DE RECHERCHE EUROPEENNE

## EP 90 50 0078

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | WO-A-9 006 569   (B. MELGUEN, FR) <br> * Page 4, ligne 21 - page 18, ligne 8; revendications; figures * <br> — — — | 1-3 | G 09 B 27/06 <br> G 09 B 23/00 |
| A | GB-A-2 094 536   (J.S. VERNEY) <br> * Page 1, ligne 53 - page 2, ligne 33; revendications; figures * <br> — — — | 1 | |
| Y | FR-A-2 550 874   (P.L.M. SABATIER, FR) <br> * Page 1, ligne 20 - page 3, ligne 31; revendications; figures * <br> — — — | 1 | |
| A | BE-A-375 151   (F. CAMBIER, BE) <br> * En entier * <br> — — — | 1 | |
| A | FR-A-2 390 788   (T. EGEBERG, NO) <br> * Page 6, ligne 6 - page 16, ligne 23; revendications; figures * <br> — — — | 1-3 | |
| A | FR-A-2 615 297   (B. VUARNESSON, FR) <br> * Revendications; figures * <br> — — — — — | 1-3 | |

DOMAINES TECHNIQUES RECHERCHES (Int. Cl.5)

G 09 B

**Le présent rapport de recherche a été établi pour toutes les revendications**

| Lieu de la recherche | Date d'achèvement de la recherche | Examinateur |
|---|---|---|
| La Haye | 08 avril 91 | GORUN M. |